# EUROPÄISCHE PATENTSCHRIFT

(11) **EP 2 649 751 B1**
(45) Veröffentlichungstag und Bekanntmachung des Hinweises auf die Patenterteilung: **27.09.2017**
(21) Anmeldenummer: 10790737.0
(22) Anmeldetag: 10.12.2010
(51) Int. Cl.: H04L 12/26, H04L 12/24

(54) **VERFAHREN UND SYSTEM ZUR ÜBERWACHUNG EINES KOMMUNIKATIONSSYSTEMS**
METHOD AND SYSTEM FOR MONITORING A COMMUNICATION SYSTEM
PROCÉDÉ ET SYSTÈME DE SURVEILLANCE D'UN SYSTÈME DE COMMUNICATION

(43) Veröffentlichungstag der Anmeldung: 16.10.2013
(73) Patentinhaber: Unify GmbH & Co. KG, 80807 München (DE)
(72) Erfinder: TIETSCH, Michael, 86916 Kaufering (DE); KLAGHOFER, Karl, 81373 München (DE); PRANGE, Holger, 81373 München (DE)
(74) Vertreter: Fritzsche, Thomas
(86) Internationale Anmeldenummer: PCT/EP2010/007540
(87) Internationale Veröffentlichungsnummer: WO 2012/076034

(56) Entgegenhaltungen:
- WO-A1-00/64083
- US-A1- 2004 088 404
- US-A1- 2009 237 240
- DINH NGUYEN-CISCO SYSTEMS RICK CHEN-CISCO SYSTEMS: "External Media Gateway Control Protocol MIB XGCP-MIB; draft-nguyen-xgcp-mib-01.txt", IETF STANDARD-WORKING-DRAFT, INTERNET ENGINEERING TASK FORCE, IETF, CH, Nr. 1, 13. April 1999 (1999-04-13), XP015033205, ISSN: 0000-0004
- WOODBURN R A ET AL: "IDPR MIB; draft-ietf-idpr-mib-03.txt", IETF STANDARD-WORKING-DRAFT, INTERNET ENGINEERING TASK FORCE, IETF, CH, Bd. idpr, Nr. 3, 1. Oktober 1993 (1993-10-01), XP015019164, ISSN: 0000-0004
- SQUIRE HATTERAS NETWORKS M: "Definitions and Managed Objects for Operations, Administration, and Maintenance (OAM) Functions on Ethernet-Like Interfaces; rfc4878.txt", IETF STANDARD, INTERNET ENGINEERING TASK FORCE, IETF, CH, 1. Juni 2007 (2007-06-01), XP015052421, ISSN: 0000-0003
- SCHOENWAELDER TU BRAUNSCHWEIG J: "Simple Network Management Protocol (SNMP) over Transmission Control Protocol (TCP) Transport Mapping; rfc3430.txt", IETF STANDARD, INTERNET ENGINEERING TASK FORCE, IETF, CH, 1. Dezember 2002 (2002-12-01), XP015009215, ISSN: 0000-0003

## Beschreibung

Die Erfindung betrifft ein Verfahren zur Überwachung eines Kommunikationssystems, beispielsweise eines sogenannten Voice-over-IP (VoIP) oder eines Voice and Video-over-IP (VVoIP) Systems oder eines anderen Kommunikationssystems. In US 2004/0088404 A1 ist eine Kombination von einer Systemfehler- und Leistungsüberwachung offenbart, die eine verteilte Datenerhebung und Speicherung von Leistungsdaten verwendet. Mit Endgeräten in Verbindung stehende Datenerhebungs- und Speicherungselemente werden über eine zentrale Konfigurationsdatenbank konfiguriert.

Der Erfindung liegt die Aufgabe zugrunde, eine technische Lehre anzugeben, mit der die Qualität von Diensten in solchen Kommunikationssystemen verbessert und der Aufwand für die Überwachung reduziert werden kann. Diese Aufgabe wird durch ein Verfahren zur Überwachung eines Kommunikationssystems nach dem unabhängigen Patentanspruch gelöst. Die Unteransprüche beziehen sich auf vorteilhafte Weiterbildungen der Erfindung.

Erfindungsgemäß ist ein Verfahren zur Überwachung eines Kommunikationssystems vorgesehen, bei dem Daten zu Zeitüberschreitungsereignissen oder fehlerhaften Übermittlungen in Beziehung zu wenigstens einem Signalisierungsprozess wenigstens eines ersten Kommunikationsendgerätes des Kommunikationssystems in dem wenigstens einen ersten Kommunikationsendgerät des Kommunikationssystems für eine von Qualitätskriterien von Nutzdatenströmen unabhängige Qualitätsbeurteilung einer Signalisierung in dem Kommunikationssystem erfasst und gespeichert werden. Die erfassten und gespeicherten für die Beurteilung der Signalisierungsqualität relevanten Daten werden in einer Sammlung zusammengestellt und diese in dem wenigstens einem ersten Kommunikationsendgerät (1, 2, 3) gesammelten Qualitätsdaten zu Signalisierungsverbindungen werden an eine Sammelstelle für diese Daten in dem Kommunikationssystem übermittelt, und die für die Beurteilung der Signalisierungsqualität relevanten Daten werden in der Sammelstelle (4), vorzugsweise zusätzlich zu bereits vorliegenden Qualitätsdaten von Nutzdatenverbindungen, für die Qualitätsbeurteilung der Signalisierung in dem Kommunikationssystem verwendet.

In diesem Zusammenhang ist unter einem Zeitüberschreitungsereignis ein Ereignis in dem Kommunikationssystem zu ver stehen, bei dem ein Kommunikationsendgerät vorzugsweise mit Hilfe von Zeitmesseinrichtungen das Ausbleiben einer von diesem Kommunikationsendgerät erwarteten Reaktion einer anderen Einrichtung oder anderer Einrichtungen des Kommunikationssystems registriert. Solche Reaktionen sind beispielsweise Quittungen von Komponenten des Kommunikationssystems, welche diese als Folge des Empfangs von Signalisierungen durch das Kommunikationsendgerät an dieses aussenden.

Bleibt beispielsweise eine Quittung aus, so kann das Kommunikationsendgerät mit einer Meldungswiederholung reagieren. Führt die so initiierte Meldungswiederholung zum Erfolg, ist damit die bestimmungsgemäße Funktion des Kommunikationssystems zwar grundsätzlich sichergestellt, aber ein Anwender des Systems müsste unter Umständen länger als erwartet beispielsweise auf das Freizeichen im Falle eines Anrufs warten, was für ihn unerklärlich bliebe.

Andere Beispiele von Daten zu Zeitüberschreitungsereignissen sind in diesem Zusammenhang Antwortzeiten oberhalb eines zu definierenden Schwellwertes, Meldungswiederholungen, Abbrüche von Vorgängen wegen komplettem Ausbleiben der Quittungen oder ähnliche Ereignisse.

Neben solchen Zeitüberschreitungsereignissen gibt es auch fehlerhafte oder unzulässige Informationselemente, welche verworfen und/oder durch sogenannten Defaults ersetzt wurden. Diese und andere fehlerhafte oder unzulässige Informationselemente sind Beispiele für Daten zu fehlerhaften Übermittlungen im Zusammenhang mit Signalisierungsprozessen eines Kommunikationsgerätes in dem Kommunikationssystem.

Bei der Beobachtung von Antwortzeiten sind die relevanten Zeiträume vorzugsweise kürzer als die Dauer der verwendeten Protokoll-Timer, die beispielsweise zu Meldungswiederholungen führen würden. Damit wäre der Vorteil verbunden, dass Anomalien erkannt werden können, bevor es spürbare oder gar dramatische Auswirkungen auf die Verbindung gibt.

Gemäß einer bevorzugten Ausführungsform der Erfindung ist es vorgesehen, dass die Daten zu Zeitüberschreitungsereignissen oder fehlerhaften Übermittlungen im Zusammenhang mit wenigstens einem Signalisierungsprozess Angaben über Antwortzeiten des Kommunikationssystems im Zusammenhang mit diesem Signalisierungsprozess enthalten, an dem das erste Kommunikationsendgerät beteiligt ist.

Gemäß diesen oder anderen bevorzugten Ausführungsbeispielen der Erfindung enthalten die Daten vorzugsweise Angaben über Meldungswiederholungen im Zusammenhang mit wenigstens einem Signalisierungsprozess, an dem das Kommunikationsendgerät beteiligt ist. Damit ist der Vorteil verbunden, dass Ereignisse, die Meldungswiederholungen nach sich ziehen, nicht unentdeckt bleiben, sondern einzeln oder statistisch erfasst und ausgewertet werden können, um Maßnahmen zur Verbesserung der Dienstgüte zu ergreifen.

Gemäß einem dieser oder anderen bevorzugten Ausführungsbeispielen der Erfindung enthalten die Daten Angaben über Abbrüche von Signalisierungsprozeduren wegen eines Ausbleibens von Quittungen im Zusammenhang mit wenigstens einem Signalisierungsprozess, an dem das erste Kommunikationsendgerät beteiligt ist. Damit ist der Vorteil verbunden, dass Ereignisse, die Abbrüche von Signalisierungsprozeduren wegen eines Ausbleibens von Quittungen nach sich ziehen, nicht unentdeckt bleiben, sondern einzeln oder statistisch erfasst und ausgewertet werden können, um Maßnahmen zur Verbesserung der Dienstgüte zu ergreifen.

Gemäß diesen oder anderen bevorzugten Ausführungsbeispielen der Erfindung enthalten die Daten Angaben über fehlerhafte oder unzulässige Informationselemente im Zusammenhang mit wenigstens einem Signalisierungsprozess, an dem das erste Kommunikationsendgerät beteiligt ist. Damit ist der Vorteil verbunden, dass Ereignisse, die fehlerhafte oder unzulässige Informationselemente im Zusammenhang mit wenigstens einem Signalisierungsprozess erzeugen oder nach sich ziehen, nicht unentdeckt bleiben, sondern einzeln oder statistisch erfasst und ausgewertet werden können, um Maßnahmen zur Verbesserung der Dienstgüte zu ergreifen.

Vorzugsweise enthalten die Daten Angaben über die Uhrzeit bei der Erhebung der Daten. Ebenfalls vorzugsweise enthalten die Daten Angaben über die Adresse eines zweiten Kommunikationsendgerätes, mit dem das erste Kommunikationsendgerät kommuniziert oder kommunizieren will. Ebenfalls vorzugsweise enthalten die Daten Angaben über die CPU-Auslastung einer an den Signalisierungsprozess beteiligten Komponente des Kommunikationssystems bei der Erhebung der Daten.

Auf diese Weise können den oben genannten oder anderen zu erfassenden Ereignissen Angaben über die Uhrzeit, über die Adresse eines zweiten Kommunikationsendgerätes, mit dem das erste Kommunikationsendgerät kommuniziert oder kommunizieren will oder über die CPU-Auslastung einer an den Signalisierungsprozess beteiligten Komponente des Kommunikationssystems zugeordnet werden, so dass eine entsprechende Klassifikation und/oder Systematisierung dieser Ereignisse möglich wird, damit Maßnahmen zur Verbesserung der Dienstgüte ergriffen werden können.

Gemäß einem bevorzugten Ausführungsbeispiel der Erfindung, das auch mit anderen Ausführungsbeispielen der Erfindung kombiniert werden kann, wird die Sammlung von Daten übermittelt, nachdem eine zuverlässige Verbindung des ersten Kommunikationsendgerätes zu der Sammelstelle für diese Daten in dem Kommunikationssystem aufgebaut worden ist. Auf diese Weise können Fehler oder Verzögerungen bei der Übermittlung dieser Daten reduziert oder vermieden werden.

Gemäß einem weiteren bevorzugten Ausführungsbeispiel der Erfindung, dessen Merkmale auch mit Merkmalen anderer Ausführungsbeispiele der Erfindung kombiniert werden können, wird die Sammlung von Daten vorzugsweise als unaufgeforderte Nachricht, besonders vorzugsweise als sogenannter TRAP des ersten Kommunikationsendgerätes an die Sammelstelle im Rahmen eines Netzwerkverwaltungsprotokolls, vorzugsweise im Rahmen des Simple Network Management Protocol (SNMP)
(http://de.wikipedia.org/wiki/Simple_Network_Management_Pro tocol) übermittelt.

Der Begriff TRAP bezeichnet im Rahmen des Simple Network Management Protocol (SNMP) eine unaufgeforderte Nachricht von einem Agenten an den Manager, in der der Agent dem Manager mitteilt, dass ein Ereignis eingetreten ist. Zur Überwachung von Netzwerkelementen durch eine zentrale Station werden im Rahmen des Simple Network Management Protocol (SNMP) sogenannte Agenten eingesetzt. Dabei handelt es sich um Programme, die vorzugsweise direkt auf den überwachten Geräten laufen. Diese Programme sind in der Lage, den Zustand des Gerätes zu erfassen und auch selbst Einstellungen vorzunehmen oder Aktionen auszulösen. Das Simple Network Management Protocol (englisch für "einfaches Netzwerkverwaltungsprotokoll", kurz SNMP), ist ein Netzwerkprotokoll, das von der IETF entwickelt wurde, um Netzwerkelemente (z. B. Router, Server, Switches, Drucker, Computer usw.) von einer zentralen Station aus überwachen und steuern zu können. Das Protokoll regelt dabei die Kommunikation zwischen den überwachten Geräten und der Überwachungsstation.

Das Simple Network Management Protocol (SNMP) beschreibt den Aufbau der Datenpakete, die gesendet werden können, und den Kommunikationsablauf. Es wurde dabei so ausgelegt, dass jedes netzwerkfähige Gerät mit in die Überwachung aufgenommen werden kann. Zu den Aufgaben des Netzwerkmanagements, die mit dem SNMP möglich sind, zählen die Überwachung von Netzwerkkomponenten, die Fernsteuerung und Fernkonfiguration von Netzwerkkomponenten, oder die Fehlererkennung und Fehlerbenachrichtigung.

Durch seine Einfachheit, Modularität und Vielseitigkeit hat sich das Simple Network Management Protocol (SNMP) zum Standard entwickelt, der sowohl von den meisten Managementprogrammen als auch von Endgeräten unterstützt wird. So ist das Simple Network Management Protocol (SNMP) z. B. nicht auf das Netzwerkprotokoll IP als Transport angewiesen. Es gibt Implementierungen, die über IPX (Novell, NetWare) oder AppleTalk (Apple, MacOS) angesprochen werden können.

Vorzugsweise wird die Sammlung von Daten als unaufgeforderte Nachricht des ersten Kommunikationsgerätes an die Sammelstelle im Rahmen eines Übertragungsprotokolls, vorzugsweise im Rahmen des sogenannten Transmission Control Protocol (TCP) oder im Rahmen des User Datagram Protocol (UDP) übermittelt.

Das User Datagram Protocol (UDP) ist ein minimales, verbindungsloses Netzwerkprotokoll, das zur Transportschicht der Internetprotokollfamilie gehört. Aufgabe von UDP ist es, Daten, die über das Internet übertragen werden, der richtigen Anwendung zukommen zu lassen
(http://de.wikipedia.org/wiki/User_Datagram_Protocol).

Die Entwicklung von UDP begann 1977, als man für die Übertragung von Sprache ein einfacheres Protokoll benötigte als das bisherige verbindungsorientierte TCP. Es wurde ein Protokoll benötigt, das nur für die Adressierung zuständig war, ohne die Datenübertragung zu sichern, da das zu Verzögerungen bei der Sprachübertragung führen würde.

Um die Daten, die mit UDP versendet werden, dem richtigen Programm auf dem Zielrechner zukommen zu lassen, werden bei UDP sogenannte Ports verwendet. Dazu wird bei UDP die Portnummer des Dienstes mitgesendet, der die Daten erhalten soll. Diese Erweiterung der Host-zu-Host- auf eine Prozesszu-Prozess-Übertragung wird als Anwendungsmultiplexen bzw. als Anwendungsdemultiplexen bezeichnet.

Zusätzlich bietet UDP die Möglichkeit einer Integritätsüberprüfung an, indem eine Prüfsumme mitgesendet wird. Dadurch kann eine fehlerhafte Übertragung erkannt werden. UDP stellt einen verbindungslosen, nicht-zuverlässigen Übertragungsdienst bereit. Das bedeutet, dass es keine Garantie gibt, dass ein einmal gesendetes Paket auch ankommt, dass Pakete in der gleichen Reihenfolge ankommen, in der sie gesendet wurden, oder dass ein Paket nur einmal beim Empfänger eintrifft. Eine Anwendung, die UDP nutzt, ist daher vorzugsweise gegenüber verlorengegangenen und unsortierten Paketen unempfindlich, beispielsweise indem sie selbst entsprechende Korrekturmaßnahmen bereitstellt oder verwendet.

Da vor Übertragungsbeginn nicht erst eine Verbindung aufgebaut werden muss, können die Partner schneller mit dem Datenaustausch beginnen. Das fällt vor allem bei Anwendungen ins Gewicht, bei denen nur kleine Datenmengen ausgetauscht werden müssen. Einfache Frage-Antwort-Protokolle wie das Domain Name System verwenden UDP, um die Netzwerkbelastung gering zu halten und damit den Datendurchsatz zu erhöhen. Ein Drei-Wege-Handschlag wie bei dem Transmission Control Protocol für den Aufbau der Verbindung würde unnötigen Overhead erzeugen.

Daneben bietet die ungesicherte Übertragung auch den Vorteil von geringen Übertragungsverzögerungsschwankungen: Geht bei einer TCP-Verbindung ein Paket verloren, wird es automatisch neu angefordert. Das braucht Zeit, die Übertragungsdauer kann daher schwanken, was für Multimediaanwendungen schlecht ist. Bei VoIP z. B. käme es zu plötzlichen Aussetzern, bzw. die Wiedergabepuffer müssten größer angelegt werden. Bei verbindungslosen Kommunikationsdiensten bringen verlorengegangene Pakete dagegen nicht die gesamte Übertragung ins Stocken, sondern vermindern lediglich die Qualität.

IP löscht Pakete etwa bei Übertragungsfehlern oder bei Überlast. Datagramme können daher fehlen. UDP bietet hierfür keine Erkennungs- oder Korrekturmechanismen, wie etwa TCP. Im Falle von mehreren möglichen Routen zum Ziel kann IP bei Bedarf neue Wege wählen. Dadurch ist es in seltenen Fällen möglich, dass später gesendete Daten früher gesendete überholen. Außerdem kann ein einmal abgesendetes Datenpaket mehrmals beim Empfänger eintreffen.

Im Zusammenhang mit der vorliegenden Erfindung bietet das User Datagram Protocol (UDP) den Vorteil, dass ein Verbindungsaufbau entfällt, wodurch die damit verbundenen Prozesse und Ressourcen nicht benötigt werden (weniger Overhead).

Das Transmission Control Protocol (TCP) (zu dt. Übertragungssteuerungsprotokoll) ist eine Vereinbarung (Protokoll) darüber, auf welche Art und Weise Daten zwischen Computern ausgetauscht werden sollen (http://de.wikipedia.org/wiki/ Transmission_Control_Protocol). Alle Betriebssysteme moderner Computer beherrschen TCP und nutzen es für den Datenaustausch mit anderen Rechnern. Das Protokoll ist ein zuverlässiges, verbindungsorientiertes, paketvermittelndes Transportprotokoll in Computernetzwerken. Es ist Teil der Internetprotokollfamilie, der Grundlage des Internets.

Entwickelt wurde TCP von Robert E. Kahn und Vinton G. Cerf. Ihre Forschungsarbeit, die sie im Jahre 1973 begannen, dauerte mehrere Jahre. Die erste Standardisierung von TCP erfolgte deshalb erst im Jahre 1981 als RFC 793. Danach gab es viele Erweiterungen, die bis heute in neuen RFCs, einer Reihe von technischen und organisatorischen Dokumenten zum Internet, spezifiziert werden.

Im Unterschied zum verbindungslosen UDP (User Datagram Protocol) stellt TCP eine Verbindung zwischen zwei Endpunkten einer Netzverbindung (Sockets) her. Auf dieser Verbindung können in beide Richtungen Daten übertragen werden. TCP setzt in den meisten Fällen auf das IP (Internet-Protokoll) auf, weshalb häufig (und oft nicht ganz korrekt) auch vom "TCP/IP-Protokoll" die Rede ist. Es ist in Schicht 4 des OSI-Referenzmodells angesiedelt.

Aufgrund seiner vielen vorteilhaften Eigenschaften (Datenverluste werden erkannt und automatisch behoben, Datenübertragung ist in beiden Richtungen möglich, Netzüberlastung wird verhindert usw.) ist TCP ein sehr weit verbreitetes Protokoll zur Datenübertragung. Beispielsweise wird TCP als fast ausschließliches Transportmedium für das WWW, E-Mail und viele andere populäre Netzdienste verwendet.

Ebenfalls bevorzugt sind Ausführungsbeispiele der Erfindung, bei denen die Sammlung von Daten als vorzugsweise unaufgeforderte Nachricht des ersten Kommunikationsendgerätes an die Sammelstelle im Rahmen einer Voice-over-IP-Signalisierung, vorzugsweise im Rahmen des sogenannten Session Initiation Protocol übermittelt wird.

IP-Telefonie (kurz für Internet-Protokoll-Telefonie), auch Internet-Telefonie oder Voice over IP (kurz VoIP) genannt, ist das Telefonieren über Computernetzwerke, welche nach Internet-Standards aufgebaut sind (siehe: http://de.wikipedia.org/wiki/IP-Telefonie). Dabei werden für Telefonie typische Informationen, d. h. Sprache und Steuerinformationen beispielsweise für den Verbindungsaufbau, über ein auch für Datenübertragung nutzbares Netz übertragen. Bei den Gesprächsteilnehmern können sowohl Computer, auf IP-Telefonie spezialisierte Telefonendgeräte, als auch über spezielle Adapter angeschlossene klassische Telefone die Verbindung herstellen.

IP-Telefonie ist eine Technologie, die es ermöglicht, den Telefondienst auf IP-Infrastruktur zu realisieren, so dass diese die herkömmliche Telefontechnologie samt ISDN, Netz und allen Komponenten ersetzen kann. Zielsetzung dabei ist eine Reduzierung der Kosten durch ein einheitlich aufgebautes und zu betreibendes Netz. Aufgrund der hohen Einsatzdauer klassischer Telefoniesysteme und der notwendigen Neuinvestitionen für IP-Telefonie wird der Wechsel bei bestehenden Anbietern oft als lang andauernder, gleitender Übergang realisiert. Währenddessen existieren beide Technologien parallel (sanfte Migration). Daraus ergibt sich ein deutlicher Bedarf an Lösungen zur Verbindung beider Telefoniesysteme (z. B. über VoIP-Gateways) und die Notwendigkeit zur gezielten Planung des Systemwechsels unter Berücksichtigung der jeweiligen Möglichkeiten für Kosten- und Leistungsoptimierung. Neue Anbieter drängen zunehmend ausschließlich mit neuer Technologie (also IP-Telefonie statt herkömmlichem Telefon) auf den Markt.

Das Session Initiation Protocol (SIP) ist ein Netzprotokoll zum Aufbau, zur Steuerung und zum Abbau einer Kommunikationssitzung zwischen zwei und mehr Teilnehmern (http://de.wikipedia.org/wiki/Session_Initiation_Protocol). Das Protokoll wird u. a. im RFC 3261 spezifiziert. In der IP-Telefonie ist das SIP ein häufig angewandtes Protokoll.

Im Gegensatz zu H.323, das von der ITU-T stammt, wurde SIP von der IETF entwickelt. H.323 kann stark vereinfacht als "ISDN über IP" bezeichnet werden. Dies erlaubte zwar insbesondere den Telefonanlagenherstellern, vergleichsweise schnell und einfach die Kommunikation auf IP-Netzwerke umzustellen, andererseits wurden aber die Stärken und Schwächen von IP-Netzen nicht genügend berücksichtigt.

Das Design des SIP dagegen lehnt sich an das Hypertext Transfer Protocol an (ist zu diesem aber nicht kompatibel) und ist deutlich besser für IP-Netze geeignet. Der Aufbau von SIP erlaubt es, auf einfache Weise neue Erweiterungen einzufügen, ohne dass alle involvierten Geräte diese verstehen müssen. Auch ist es allgemeiner gehalten: Während H.323 vorwiegend für die Telefonie gedacht ist, können mit SIP Sitzungen beliebiger Art verwaltet werden. Die "Nutzlast" der Sitzung, also die zu übertragenden Nutz-Datenströme, können vom Prinzip Datenströme jeder Art sein, die sich über ein Netzwerk übertragen lassen. Am weitesten verbreitet sind Audio- und Video-Übertragungen, aber beispielsweise auch einige Online-Spiele greifen auf SIP zurück, um die Übertragung zu verwalten.

Um ein Internet-Telefonat zu führen, braucht man mehr als nur SIP, denn es dient lediglich dazu, die Kommunikationsmodalitäten zu vereinbaren bzw. auszuhandeln - die eigentlichen Daten für die Kommunikation müssen über andere, dafür geeignete Protokolle ausgetauscht werden. Hierzu wird häufig in SIP das Session Description Protocol (SDP, RFC 4566, die Übersetzung aus dem Englischen "Sitzungs-Beschreibungs-Protokoll" ist nicht gebräuchlich) eingebettet, um die Details der Video- und/oder Audio-Übertragung auszuhandeln. Dabei teilen sich die Geräte gegenseitig mit, welche Methoden der Video- und Audio-Übertragung sie beherrschen (die sogenannten Codecs), mit welchem Protokoll sie das tun möchten und an welcher Netzadresse sie senden und empfangen wollen.

Diese Medien-Aushandlung ist also kein direkter Bestandteil von SIP, sondern wird dadurch erreicht, dass in SIP ein weiteres Protokoll mit eingebettet wird. Diese Trennung von Sitzungs- und Medienaushandlung ist einer der Vorteile von SIP, da sie eine große Flexibilität bei der unterstützten Nutzlast erlaubt: Möchte zum Beispiel ein Hersteller SIP für eine spezialisierte Anwendung verwenden, so kann er dafür eine eigene Medienaushandlung entwerfen, falls dafür noch kein Protokoll existiert.

Die Erfindung ist je nach Ausführungsform mit unterschiedlichen Vorteilen verbunden.

Zum einen ermöglicht sie es den Teilnehmern eines Kommunikationssystems Dienste wie Voice-over-IP oder Voice and Video-over-IP in bestmöglicher Qualität anzubieten, indem nicht nur Nutzdatenströme, beispielsweise über das sogenannte Real Time Protocol (RTP) mit besonders hoher Priorität in den Netzen geroutet werden, sondern indem auch die Signalisierung in diesem Kommunikationssystem mit einer definierten Qualität erfolgen kann. Die Erfindung ermöglicht demnach die laufende Überwachung der Qualität von Verbindungen, vorzugsweise mithilfe von Protokollen, wie dem Real Time Control Protocol (RTCP) und dem Real Time Application Quality-of-Service Monitoring (RAQMON).

Mithilfe der Erfindung ist es nun möglich, unerwünschte Ereignisse, wie sehr langsame Verbindungsaufbauversuche oder Verbindungsabbrüche, insbesondere solcher Ereignisse, deren Ursache nicht in der Übermittlung der Nutzdatenströme begründet liegt, im Sinne einer Qualitätssteigerung zu beeinflussen. Die Erfindung ermöglicht insbesondere eine von den Qualitätskriterien der Nutzdatenströme unabhängige Qualitätsbeurteilung der Signalisierung in dem Kommunikationssystem. Dies geschieht vorzugsweise dadurch, dass die gesammelten für die Beurteilung der Signalisierungsqualität relevanten Daten in einem entsprechenden Dienstqualitätsbericht einer zentralen Auswertung in dem Kommunikationssystem zugeführt werden.

Vorzugsweise werden hierbei in den Endgeräten gesammelte Qualitätsdaten zu Signalisierungsverbindungen an eine oder mehrere zentrale Sammler geschickt, wo diese Daten, vorzugsweise zusätzlich zu bereits vorliegenden Qualitätsdaten der Nutzdatenverbindungen für eine detaillierte Beurteilung der Netzwerksituation verwendet werden. Die Erfindung ermöglicht hierbei die Erklärung und hierdurch die Behebung von bisher häufig unerklärlichen Zuständen in Kommunikationssystemen, welche bei bisher bekannten Systemen auch in Ermangelung einschlägiger Qualitätsdaten zu den Signalisierungsverbindungen nicht möglich war.

Die Erfindung wird im Folgenden anhand eines bevorzugten Ausführungsbeispiels mithilfe einer Figur näher beschrieben.

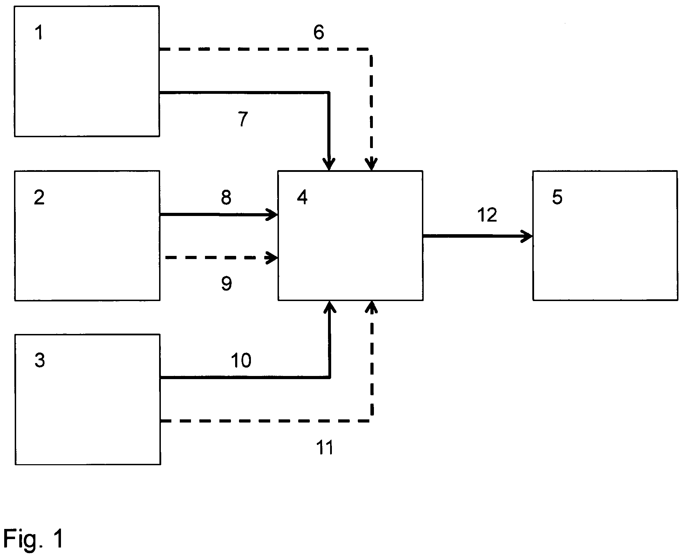

Dabei zeigt FIG. 1 in schematischer Weise ein Ausführungsbeispiel eines erfindungsgemäßen Kommunikationssystems zusammen mit den darin auftretenden Datenströmen.

Am Beispiel eines Kommunikationssystems, in dem drei Kommunikationsendgeräte 1, 2 und 3, beispielsweise ein Wireless Access Point, ein Gateway und ein Telefon Daten 7, 8 und 10 zu Zeitüberschreitungsereignissen oder fehlerhaften Übermittlungen im Zusammenhang mit wenigstens einem Signalisierungsprozess sammeln, kann die Erfindung verdeutlicht werden. Die gesammelten Daten werden von den Kommunikationsendgeräten 1, 2 und 3 an eine Sammelstelle 4 geschickt, welche vorzugsweise auch Daten 6, 9 und 11 zur Qualität der Nutzdatenverbindung mit den Geräten 1, 2 und 3 sammelt. Die gesammelten Daten 12 werden von der Sammelstelle 4 an eine zentrale Sammelstelle 5 gesendet, welche entsprechend den gesammelten Informationen Maßnahmen zur Verbesserung der Verbindungs- und Dienstqualität ergreifen kann.

## Patentansprüche

1. Verfahren zur Überwachung eines Kommunikationssystems mit folgenden Schritten:
a) Erfassung und Speicherung in wenigstens einem ersten Kommunikationsendgerät (1, 2, 3) des Kommunikationssystems von Daten zu Zeitüberschreitungsereignissen oder fehlerhaften Übermittlungen in Beziehung zu wenigstens einem Signalisierungsprozess des wenigstens einen ersten Kommunikationsendgerätes (1, 2, 3) des Kommunikationssystems für eine von Qualitätskriterien von Nutzdatenströmen unabhängige Qualitätsbeurteilung einer Signalisierung in dem Kommunikationssystem;
b) Erstellung einer Sammlung solcher für die Beurteilung der Signalisierungsqualität relevanter Daten und Übermittlung (7, 8, 10) dieser in dem wenigstens einen ersten Kommunikationsendgerät (1, 2, 3) gesammelten Qualitätsdaten zu Signalisierungsverbindungen an eine Sammelstelle (4) für diese Daten in dem Kommunikationssystem, und
c) Verwendung der für die Beurteilung der Signalisierungsqualität relevanten Daten in der Sammelstelle (4).

2. Verfahren nach Anspruch 1, **dadurch gekennzeichnet, dass** die Daten Antwortzeiten des Kommunikationssystems im Zusammenhang mit wenigstens einem Signalisierungsprozess enthalten, an dem das erste Kommunikationsendgerät beteiligt ist.

3. Verfahren nach einem der vorhergehenden Ansprüche, **dadurch gekennzeichnet, dass** die Daten Angaben über Meldungswiederholungen im Zusammenhang mit wenigstens einem Signalisierungsprozess enthalten, an dem das erste Kommunikationsendgerät beteiligt ist.

4. Verfahren nach einem der vorhergehenden Ansprüche, **dadurch gekennzeichnet, dass** die Daten Angaben über Abbrüche von Signalisierungsprozeduren wegen eines Ausbleibens von Quittungen im Zusammenhang mit wenigstens einem Signalisierungsprozess enthalten, an dem das erste Kommunikationsendgerät beteiligt ist.

5. Verfahren nach einem der vorhergehenden Ansprüche, **dadurch gekennzeichnet, dass** die Daten Angaben über fehlerhafte oder unzulässige Informationselemente im Zusammenhang mit wenigstens einem Signalisierungsprozess enthalten, an dem das erste Kommunikationsendgerät beteiligt ist.

6. Verfahren nach einem der vorhergehenden Ansprüche, **dadurch gekennzeichnet, dass** die Daten Angaben über die Uhrzeit bei der Erhebung der Daten enthalten.

7. Verfahren nach einem der vorhergehenden Ansprüche, **dadurch gekennzeichnet, dass** die Daten Angaben über die Adresse eines zweiten Kommunikationsendgerätes enthalten, mit dem das erste Kommunikationsendgerät kommuniziert oder kommunizieren will.

8. Verfahren nach einem der vorhergehenden Ansprüche, **dadurch gekennzeichnet, dass** die Daten Angaben über die CPU-Auslastung einer an dem Signalisierungsprozess beteiligten Komponente des Kommunikationssystems bei der Erhebung der Daten enthalten.

9. Verfahren nach einem der vorhergehenden Ansprüche, **dadurch gekennzeichnet, dass** die Sammlung von Daten übermittelt wird (7, 8, 10), nachdem eine zuverlässige Verbindung des ersten Kommunikationsendgerätes (1, 2, 3) zu der Sammelstelle (4) für diese Daten in dem Kommunikationssystem aufgebaut worden ist.

10. Verfahren nach einem der vorhergehenden Ansprüche, **dadurch gekennzeichnet, dass** die Sammlung von Daten als vorzugsweise unaufgeforderte Nachricht, besonders vorzugsweise als Trap, des ersten Kommunikationsendgerätes an die Sammelstelle (4) im Rahmen eines Netzwerkverwaltungsprotokolls, vorzugsweise im Rahmen des Simple Network Management Protocol, SNMP, übermittelt wird.

11. Verfahren nach einem der vorhergehenden Ansprüche, **dadurch gekennzeichnet, dass** die Sammlung von Daten als vorzugsweise unaufgeforderte Nachricht des ersten Kommunikationsendgerätes an die Sammelstelle (4) im Rahmen eines Übertragungssteuerungsprotokolls, vorzugsweise im Rahmen des Transmission Control Protocol oder im Rahmen des User Datagram Protocol, UDP, übermittelt wird.

12. Verfahren nach einem der vorhergehenden Ansprüche, **dadurch gekennzeichnet, dass** die Sammlung von Daten als vorzugsweise unaufgeforderte Nachricht des ersten Kommunikationsendgerätes an die Sammelstelle (4) im Rahmen einer Voice-over-IP-Signalisierung, vorzugsweise im Rahmen des Session Initiation Protocol, übermittelt wird.

13. Verfahren nach einem der vorhergehenden Ansprüche, **dadurch gekennzeichnet, dass** die gesammelten für die Beurteilung der Signalisierungsqualität relevanten Daten einer zentralen Auswertungssammelstelle (5) in dem Kommunikationssystem zugeführt werden, die Maßnahmen zur Verbesserung der Verbindungs- und Dienstqualität ergreift derart, dass die Signalisierung in dem Kommunikationssystem mit einer definierten Qualität erfolgt.

14. Kommunikationssystem, das zu überwachen ist, umfassend:
a) wenigstens ein erstes Kommunikationsendgerät (1, 2, 3), das eingerichtet ist zur Erfassung und Speicherung von Daten zu Zeitüberschreitungsereignissen oder fehlerhaften Übermittlungen in Beziehung zu wenigstens einem Signalisierungsprozess des wenigstens einen ersten Kommunikationsendgerätes (1, 2, 3) des Kommunikationssystems für eine von Qualitätskriterien von Nutzdatenströmen unabhängige Qualitätsbeurteilung einer Signalisierung in dem Kommunikationssystem;
b) wobei das wenigstens eine erste Kommunikationsendgerät (1, 2, 3) weiter dazu eingerichtet ist zur Erstellung einer Sammlung solcher für die Beurteilung der Signalisierungsqualität relevanter Daten und zur Übermittlung (7, 8, 10) dieser in dem wenigstens einen ersten Kommunikationsendgerät (1, 2, 3) gesammelten Qualitätsdaten zu Signalisierungsverbindungen an eine Sammelstelle (4) für diese Daten in dem Kommunikationssystem, und
c) die Sammelstelle (4) für die für die Beurteilung der Signalisierungsqualität relevanten Daten, die eingerichtet ist zur Verwendung der für die Beurteilung der Signalisierungsqualität relevanten Daten.

15. Kommunikationssystem nach Anspruch 14, weiterhin umfassend eine zentrale Auswertungssammelstelle (5) zur Zuführung der gesammelten für die Beurteilung der Signalisierungsqualität relevanten Daten von der Sammelstelle (4), wobei die zentrale Auswertungssammelstelle (5) eingerichtet ist zur Ergreifung von Maßnahmen zur Verbesserung der Verbindungs- und Dienstqualität derart, dass die Signalisierung in dem Kommunikationssystem mit einer definierten Qualität erfolgt.

## Claims

1. A method for monitoring a communication system with the following steps:
a) acquisition and storage in at least one first communication terminal (1, 2, 3) of the communication system of data on timeout events or faulty transmissions in relation to at least one signaling process of the at least one communication terminal (1, 2, 3) of the communication system for a quality evaluation of a signaling, which is independent of quality criteria of useful data streams, in the communication system;
b) establishment of a collection of such data relevant to the evaluation of the signaling quality, and transmission (7, 8, 10) of said quality data collected in the at least one first communication terminal (1, 2, 3) pertaining to signaling connections to a collection point for said data in the communication system, and
c) use of the data relevant to the evaluation of the signaling quality in the collection point (4).

2. The method according to Claim 1, **characterized in that** the data contains response times of the communication system in connection with at least one signaling process in which the first communication terminal is participating.

3. The method according to any one of the preceding claims, **characterized in that** the data contains information on message repetitions in connection with at least one signaling process in which the first communication terminal is participating.

4. The method according to any one of the preceding claims, **characterized in that** the data contains information on terminations of signaling procedures due to an absence of acknowledgments in connection with at least one signaling process in which the first communication is participating.

5. The method according to any one of the preceding claims, **characterized in that** the data contains information on faulty or inadmissible information elements in connection with at least one signaling process in which the first communication terminal is participating.

6. The method according to any one of the preceding claims, **characterized in that** the data contains information on the time of collection of the data.

7. The method according to any one of the preceding claims, **characterized in that** the data contains information on the address of a second communication terminal with which the first communication terminal is communicating or wants to communicate.

8. The method according to any one of the preceding claims, **characterized in that** the data contains information on the CPU utilization of a component of the communication system, which is participating in the signaling process, at the time of the collection of the data.

9. The method according to any one of the preceding claims, **characterized in that** the collection of data is transmitted (7, 8, 10), after a reliable connection of the first communication terminal (1, 2, 3) to the collection point (4) for said data has been set up in the communication system.

10. The method according to any one of the preceding claims, **characterized in that** the collection of data is transmitted as a preferably unrequested message, particularly preferably as a trap, of the first communication terminal to the collection point (4) in the context of a network management protocol, preferably in the context of the Simple Network Management Protocol, SNMP.

11. The method according to any one of the preceding claims, **characterized in that** the collection of data is transmitted as a preferably unrequested message of the first communication terminal to the collection point (4) in the context of a transmission control protocol, preferably in the context of the Transmission Control Protocol or in the context of the User Datagram Protocol, UDP.

12. The method according to any one of the preceding claims, **characterized in that** the collection of data is transmitted as a preferably unrequested message of the first communication terminal to the collection point (4) in the context of a voice over IP signaling, preferably in the context of the Session Initiation Protocol.

13. The method according to any one of the preceding claims, **characterized in that** the collected data relevant to the evaluation of the signal quality is supplied to a central processing collection point (5) in the communication system, which takes measures for improving the connection and service quality, in such a manner that the signaling in the communication system occurs with a defined quality.

14. A communication system which is to be monitored, comprising:
a) at least one first communication terminal (1, 2, 3), which is arranged for acquiring and storing data on timeout events or faulty transmissions in relation to at least one signaling process of the at least one first communication terminal (1, 2, 3) of the communication system for a quality evaluation of a signaling, which is independent of quality criteria of useful data streams, in the communication system;
b) wherein the at least one first communication terminal (1, 2, 3) is arranged moreover for establishing a collection of such data relevant to the evaluation of the signaling quality, and for the transmission (7, 8, 10) of said quality data collected in the at least one first communication terminal (1, 2, 3) pertaining to signaling connections to a collection point (4) for this data in the communication system, and
c) the collection point (4) for the data relevant to the evaluation of the signaling quality, which is arranged for the use of the data relevant to the evaluation of the signaling quality.

15. The communication system according to Claim 14, moreover comprising a central processing collection point (5) for supplying the collected data relevant to the evaluation of the signaling quality from the collection point (4), wherein the central processing collection point (5) is arranged in order to take measures for improving the connection and service quality in such a manner that the signaling in the communication system occurs with a defined quality.

## Revendications

1. Procédé de surveillance d'un système de communication avec les étapes suivantes :
a) la détection et l'enregistrement dans au moins un premier appareil terminal de communication (1, 2, 3) du système de communication de données relatives aux événements de dépassement de temps ou transmissions défectueuses en rapport avec au moins un processus de signalisation d'au moins un premier appareil terminal de communication (1, 2, 3) du système de communication pour une évaluation de qualité, indépendante de critères de qualité de courants de données utiles, d'une signalisation dans le système de communication ;
b) l'établissement d'une collecte de telles données pertinentes pour l'évaluation de la qualité de signalisation et la transmission (7, 8, 10) de ces données de qualité collectées dans l'au moins un premier appareil terminal de communication (1, 2, 3) relatives aux liaisons de signalisation sur un point de collecte (4) pour ces données dans le système de communication, et
c) l'utilisation des données pertinentes pour l'évaluation de la qualité de signalisation dans le point de collecte (4).

2. Procédé selon la revendication 1, **caractérisé en ce que** les données contiennent des temps de réponse du système de communication en relation avec au moins un processus de signalisation, auquel le premier appareil terminal de communication participe.

3. Procédé selon l'une des revendications précédentes, **caractérisé en ce que** les données contiennent des indications sur des répétitions de message en relation avec au moins un processus de signalisation, auquel le premier appareil terminal de communication participe.

4. Procédé selon l'une des revendications précédentes, **caractérisé en ce que** les données contiennent des indications sur des interruptions de procédures de signalisation à cause d'une absence d'accusés de réception en relation avec au moins un processus de signalisation, auquel le premier appareil terminal de communication participe.

5. Procédé selon l'une des revendications précédentes, **caractérisé en ce que** les données contiennent des indications sur des éléments d'information défectueux ou non autorisés en relation avec au moins un processus de signalisation, auquel le premier appareil terminal de communication participe.

6. Procédé selon l'une des revendications précédentes, **caractérisé en ce que** les données contiennent des indications sur l'heure lors de la collecte des données.

7. Procédé selon l'une des revendications précédentes, **caractérisé en ce que** les données contiennent des indications sur l'adresse d'un second appareil terminal de communication, avec lequel le premier appareil terminal de communication communique ou veut communiquer.

8. Procédé selon l'une des revendications précédentes, **caractérisé en ce que** les données contiennent des indications sur l'utilisation de l'UC d'un composant participant au processus de signalisation du système de communication lors de la collecte des données.

9. Procédé selon l'une des revendications précédentes, **caractérisé en ce que** la collecte de données est transmise (7, 8, 10) après qu'une liaison fiable du premier appareil terminal de communication (1, 2, 3) avec le point de collecte (4) pour ces données dans le système de communication a été établie.

10. Procédé selon l'une des revendications précédentes, **caractérisé en ce que** la collecte de données est transmise comme message de préférence non sollicité, particulièrement de préférence comme piège, du premier appareil terminal de communication au point de collecte (4) dans le cadre d'un protocole de gestion de réseau, de préférence dans le cadre du protocole de gestion de réseau simple, SNMP.

11. Procédé selon l'une des revendications précédentes, **caractérisé en ce que** la collecte de données est transmise comme message de préférence non sollicité du premier appareil terminal de communication au point de collecte (4) dans le cadre d'un protocole de commande de transmission, de préférence dans le cadre du protocole de commande de transmission ou dans le cadre du protocole de datagramme utilisateur, UDP.

12. Procédé selon l'une des revendications précédentes, **caractérisé en ce que** la collecte de données est transmise comme message de préférence non sollicité du premier appareil terminal de communication au point de collecte (4) dans le cadre d'une signalisation de voix sur IP, de préférence dans le cadre du protocole d'initiation de session.

13. Procédé selon l'une des revendications précédentes, **caractérisé en ce que** les données pertinentes collectées pour l'évaluation de la qualité de signalisation d'un point de collecte d'évaluation central (5) sont fournies dans le système de communication qui prend des mesures pour l'amélioration de la qualité de liaison et de service de telle manière que la signalisation soit effectuée dans le système de communication avec une qualité définie.

14. Système de communication qui est à surveiller comprenant :
a) au moins un premier appareil terminal de communication (1, 2, 3) qui est aménagé afin de détecter et enregistrer des données relatives à des événements de dépassement de temps ou transmissions défectueuses en rapport avec au moins un processus de signalisation d'au moins un premier appareil terminal de communication (1, 2, 3) du système de communication pour une évaluation de qualité, indépendante de critères de qualité de courants de données utiles, d'une signalisation dans le système de communication ;
b) dans lequel l'au moins un premier appareil terminal de communication (1, 2, 3) est aménagé en outre pour l'établissement d'une collecte de telles données pertinentes pour l'évaluation de la qualité de signalisation et pour la transmission (7, 8, 10) de ces données de qualité collectées dans l'au moins un premier appareil terminal de communication (1, 2, 3) relatives aux liaisons de signalisation à un point de collecte (4) pour ces données dans le système de communication, et
c) le point de collecte (4) pour les données pertinentes pour l'évaluation de la qualité de signalisation, qui est aménagé pour l'utilisation des données pertinentes pour l'évaluation de la qualité de signalisation.

15. Système de communication selon la revendication 14, comprenant en outre un point de collecte d'évaluation central (5) pour l'apport des données pertinentes pour l'évaluation de la qualité de signalisation du point de collecte (4), dans lequel le point de collecte d'évaluation (5) central est aménagé pour la prise de mesures pour l'amélioration de la qualité de liaison et de service de telle manière que la signalisation dans le système de communication soit effectuée avec une qualité définie.
